# EUROPÄISCHE PATENTSCHRIFT

(11) **EP 1 394 929 B1**
(45) Veröffentlichungstag und Bekanntmachung des Hinweises auf die Patenterteilung: **10.09.2014**
(21) Anmeldenummer: 03025997.2
(22) Anmeldetag: 18.12.1998
(51) Int. Cl.: H02P 9/30, F03D 9/00, F03D 7/02, F03D 7/04, H02P 9/00, H02P 9/10

(54) **Verfahren zum Betreiben einer Windenergieanlage sowie Windenergieanlage**
Method for operating a wind energie plant and wind energie plant therefor
Procédé pour actionner une installation à énergie éolienne et installation à énergie éolienne correspondante

(30) Priorität: 19.12.1997 DE 19756777
(43) Veröffentlichungstag der Anmeldung: 03.03.2004
(62) Teilanmeldung aus: 01122899.6
(73) Patentinhaber: Wobben Properties GmbH, 26605 Aurich (DE)
(72) Erfinder: Wobben, Aloys, 26607 Aurich (DE)
(74) Vertreter: Eisenführ Speiser

(56) Entgegenhaltungen:
- DE-A- 3 438 893
- DE-C- 3 833 719
- "The technical sensation Enercon E-40", ENERCON, 1 September 1993 (1993-09-01),

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an einen elektrischen Verbraucher, insbesondere ein elektrisches Netz.

Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei den bekannten Windenergieanlagen zum Erzeugen elektrischer Energie aus Wind wird der Generator mit dem elektrischen Verbraucher, häufig einem elektrischen Netz im Parallelbetrieb betrieben. Während des Betriebs der Windenergieanlage variiert die von dem Generator bereitgestellte elektrische Leistung in Abhängigkeit von der aktuellen Windgeschwindigkeit und somit der Windleistung. Dies hat zur Folge, dass auch die elektrische Generator-Spannung in Abhängigkeit von der Windleistung variabel ist. Dies führt zu folgenden Problemen:

Im Falle der Einspeisung der erzeugten elektrischen Leistung in ein elektrisches Netz, beispielsweise ein öffentliches Stromnetz, kommt es an einem Verknüpfungs- oder Netzanbindungspunkt, an dem die elektrische Generator-Leistung in das Netz eingespeist wird, zu einer Erhöhung der Netzspannung. Insbesondere bei starken Spannungsänderungen der Generator-Spannung kommt es zu starken, unerwünschten Änderungen der Netzspannung.

Unter besonderen Umständen kann es dazu kommen, dass die Netzspannung im Versorgungsnetz auf einen unerwünscht hohen Wert ansteigt. Dies ist insbesondere dann der Fall, wenn die abgenommene Leistung seitens der Verbraucher sehr gering ist, während in das Versorgungsnetz hohe elektrische Leistung eingebracht wird. Solche Situationen können beispielsweise nachts auftreten, wenn die elektrische Verbrauchsleistung in den Haushalten eher gering ist, während bei starkem Wind von einem Windenergiekonverter eine entsprechend hohe elektrische Leistung dem Versorgungsnetz zur Verfügung gestellt wird. Wenn die Spannung im Versorgungsnetz bzw. am Netzanbindungspunkt der Windenergieanlage über einen vorbestimmten Wert ansteigt, muss die Windenergieanlage bzw. dessen Generator vom Netz abgekoppelt werden und die Windenergieanlage müsste, weil keine Leistung mehr abgenommen werden kann, vom Netz völlig abgeschaltet werden. Eine derartige Abschaltung führt zu einer für den Betreiber der Windenergieanlage und den Betreiber des Netzwerks gleichermaßen unerwünschten Unterbrechung der Einspeisung von elektrischer Leistung.

Aus DE-PS 368 799, DE-OS 44 28 085 sowie DE-OS 30 23 195 ist es allgemein bekannt, dass bei Anlagen, wie Windkraftanlagen oder Solargeneratoren, die vom Generator bereitgestellte Leistung schwankt, was bei der Einspeisung in das Netz 24 zu den oben beschriebenen Problemen führt.

Das Dokument "The technical sensation Emercom E-40" (1993-09) offenbart ein Verfahren zum Betrieben einer Windenergieanlage gemäß dem Oberbegriff des Anspruchs 1 und eine Windenergieanlage gemäß dem Oberbegriff des Anspruchs 6.

Die Aufgabe der vorliegenden Erfindung besteht darin, ein Verfahren zum Betreiben einer Windenergieanlage sowie eine Windenergieanlage anzugeben, die die Nachteile des Standes der Technik vermeidet und insbesondere Spannungsüberschwankungen beim Verbraucher, insbesondere einem elektrischen Netz sowie eine unerwünschte Abschaltung der Windenergieanlage vermeidet.

Die Erfindung löst die Aufgabe bei einem Verfahren der eingangs genannten Art durch die Merkmale des Anspruchs 1.

Bei einer Vorrichtung der eingangs genannten Art wird die Aufgabe gelöst durch die Merkmale des Anspruchs 6.

Wie beschrieben, kann es bei Energieerzeugung zur Schwankung der erzeugbaren Energie kommen, was bei Windenergieanlagen abhängig von der Windstärke naturgegeben ist. Diese Schwankungen sind jedoch nicht Ausgangspunkt der Erfindung. Vielmehr beschäftigt sich die Erfindung mit dem Problem, dass es auch auf der Verbraucherseite Schwankungen im Leistungsverbrauch. gibt, was sich als schwankende Netzspannung auswirkt. Solche Netzspannungen sind bekanntlich kritisch, weil die elektrischen Geräte - insbesondere Computer - häufig nur ungenügend gegen kritische Spannungsschwankungen gesichert sind. Die Erfindung sieht somit vor, dass nicht nur die Schwankung in der Energieerzeugung auf der Erzeugerseite, sondern auch die Schwankung auf der Verbraucherseite bei der Einspeisung der Energie berücksichtigt wird, so dass die bereitgestellte elektrische Spannung am Einspeisepunkt auf dem gewünschten Sollwert eingeregelt wird.

Die Erfindung vermeidet unerwünschte Schwankungen der beim Verbraucher anliegenden Spannung, insbesondere in einem Netz bestehenden elektrischen Spannung, indem die abgegebene elektrische Leistung des Generators in Abhängigkeit von der Spannung des Verbrauchers bzw. des Netzes eingeregelt wird. Dadurch werden auch unerwünschte Spannungsschwankungen vermieden, die sich aus Änderungen der Windleistung ergeben können.

Ein weiterer Vorteil der Erfindung liegt darin, dass selbst bei sehr starken Änderungen der Windleistung die Windenergieanlage nicht abgeschaltet zu werden braucht, um Netzschwankungen zu verhindern. Erfindungsgemäß wird die Windenergieanlage auch bei starken Änderungen der Windleistung weiterbetrieben, ohne dass Netzspannungsänderungen auftreten. Hierzu ist die erfindungsgemäße Regelungseinrichtung mit Spannungsaufnehmern zum Aufnehmen der am Verbraucher oder dem Netz anliegenden Spannung ausgestattet.

Mit Hilfe der Erfindung können ferner auch bei konstanter Windleistung Netzspannungsschwankungen kompensiert werden, wie regelmäßig in elektrischen Netzwerken zur Elektrizitätsversorgung auftreten, da einige mit dem Netz verbundene Verbraucher zeitweilig große Leistungen aus dem Netz aufnehmen, woraus eine Spannungsreduzierung resultieren kann. Im Falle einer solchen Spannungsreduzierung kann die erfindungsgemäße Windenergieanlage eine erhöhte elektrische Leistung in das Netz einspeisen und auf diese Weise Spannungsschwankungen kompensieren. Hierzu wird beispielsweise auf der Grundlage des erfindungsgemäß aufgenommenen Netzspannungswertes die Einspeisespannung an der Schnittstelle zwischen Windenergieanlage und Netz angehoben.

Gemäß einer bevorzugten Ausführungsform des erfindungsgemäßen Verfahrens wird die abgegebene Leistung geregelt, indem die bereitgestellte elektrische Spannung auf einen gewünschten Sollwert eingeregelt wird. Hierbei kann auf besonders einfache Weise eine Netzspannungskompensation vorgenommen werden, die - wie zuvor beschrieben - beispielsweise auftreten kann, wenn ein an das Netz angeschlossener Verbraucher eine hohe Leistung benötigt.

Gemäß einer weiteren bevorzugten Ausführungsform der Erfindung wird die elektrische Spannung als Wechselspannung mit einer vorgebbaren Frequenz bereitgestellt. Auf diese Weise kann die eingespeiste Leistung an die Zustände im Netz angepasst werden und kann die Netzfrequenz beeinflusst werden. Zweckmäßigerweise entspricht die vorgebbare Frequenz der Netzfrequenz.

Die erfindüngsgemäße Windenergieanlage wird in vorteilhafter Weise weitergebildet durch eine Regelungseinrichtung, die einen Mikroprozessor aufweist, da auf diese Weise eine digitale Regelung verwirklicht werden kann.

Die Erfindung wird nachstehend anhand eines Ausführungsbeispiels eines Verfahrens zum Betreiben einer Windenergieanlage unter Bezugnahme auf die Zeichnungen veranschaulicht. Es zeigen:
- Fig. 1: eine in ein Netz einspeisende Windenergieanlage in einer schematischen Darstellung;
- Fig.2: eine erfindungsgemäße Regelungseinrichtung zum Betreiben einer Windkraftanlage; und
- Fig. 3: ein Diagramm, das den Zusammenhang zwischen Windleistung und Netzspannung veranschaulicht.

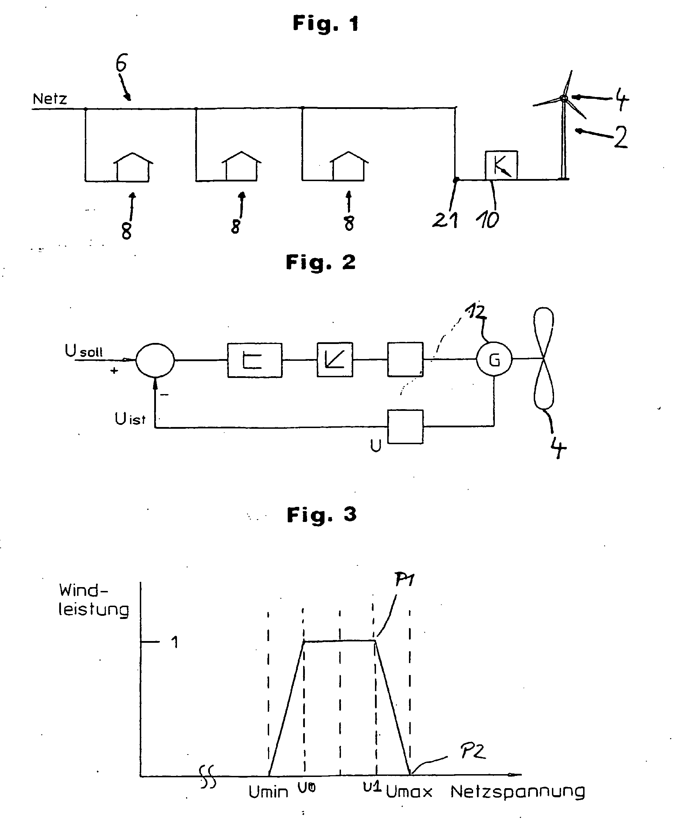

Eine in Fig. 1 schematisch dargestellte Windenergieanlage 2 mit einem Rotor 4 ist mit einem elektrischen Netz 6, das beispielsweise ein öffentliches Netz sein kann, verbunden. An das Netz sind mehrere elektrische Verbraucher 8 angeschlossen. Der in Fig. 1 nicht dargestellte elektrische Generator der Windenergieanlage 2 ist mit einer elektrischen Steuerungs- und Regelungsanordnung 10 gekoppelt, die den in dem Generator erzeugten Wechselstrom zunächst gleichrichtet und anschließend in eine Wechselspannung umwandelt, die der Netzfrequenz entspricht. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

Fig. 2 veranschaulicht die erfindungsgemäße Regelungseinrichtung. Der schematisch dargestellte Rotor 4 ist mit einem Generator 12 gekoppelt, der eine elektrische Leistung bereitstellt, die von der Windgeschwindigkeit und somit der Windleistung abhängt. Die in dem Generator 12 erzeugte Wechselspannung kann zunächst gleichgerichtet und anschließend in eine Wechselspannung umgewandelt werden, die eine der Netzfrequenz entsprechende Frequenz aufweist.

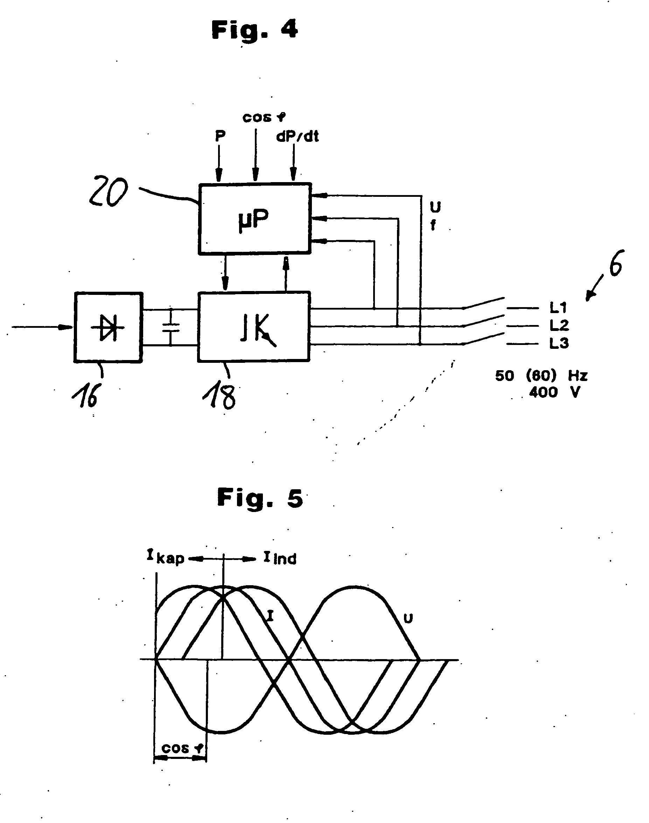

Mit Hilfe eines Spannungsaufnehmers (nicht dargestellt) wird die Netzspannung an einem Ort in dem Netz 6 (Fig. 1) ermittelt. In Abhängigkeit von der ermittelten Netzspannung wird - ggf. mit Hilfe eines in Fig. 4 dargestellten Microprozessors - eine optimale Generator-Spannung Uₛₒₗₗ (vgl. Fig. 2) berechnet. Mit Hilfe der Regelungseinrichtung wird dann die Generator-Spannung Uᵢₛₜ auf den gewünschten Spannungswert Uₛₒₗₗ eingeregelt. Durch diese Regelung der Generator-Spannung wird die von dem Generator 12 an einen Verbraucher, im Ausführungsbeispiel das Netz 6, abgegebene elektrische Leistung geregelt, die in das Netz 6 eingespeist wird. Durch eine derartig geregelte Einspeisung der von der Windenergieanlage abgegebenen Leistung können Schwankungen der Netzspannung im Netz 6 vermieden oder erheblich reduziert werden.

Das in Fig. 3 dargestellte Diagramm veranschaulicht den Zusammenhang zwischen der auf der Ordinate aufgetragenen von der Windenergieanlage abgegebenen Leistung und der auf der Abszisse aufgetragenen Netzspannung. Weicht die Netzspannung nur wenig von ihrem Sollwert ab, der zwischen den Spannungswerten Uₘᵢₙ und Uₘₐₓ liegt, so wird entsprechend dem geraden oberen Abschnitt der Kurve (gerade Linie parallel zur Abszisse) eine gleichbleibende Leistung von dem Generator an das Netz abgegeben. Steigt die Netzspannung weiter an und übersteigt einen Wert, der durch den Punkt P1 definiert ist, so wird die eingespeiste Leistung reduziert. Ist der Wert Uₘₐₓ erreicht, so ist die eingespeiste Leistung gleich Null (Punkt P2). Selbst in dem Fall, dass eine hohe Windleistung vorhanden ist, wird in Punkt P2 keine Leistung in das Netz eingespeist. Sinkt die Windleistung stark ab, so kann nur noch eine reduzierte Leistung in das Netz eingespeist werden. Selbst wenn keine Leistung seitens des Windenergiekonverters mehr abgegeben wird, wird dieser - allerdings ohne Leistungsabgabe - weiterbetrieben, so dass stets eine Leistungsabgabe erfolgen kann, sobald die Netzspannung wieder einen Wert zwischen Uₘᵢₙ und Uₘₐₓ angenommen hat.

Fig. 4 zeigt wesentliche Bestandteile der Steuerungs- und Regelungsanordnung 10 aus Fig. 1. Die Steuerungs- und Regelungsanordnung 10 weist einen Gleichrichter 16 auf, in dem die in dem Generator erzeugte Wechselspannung gleichgerichtet wird. Ein mit dem Gleichrichter 16 verbundener Frequenzumrichter 18 wandelt die zunächst gleichgerichtete Gleichspannung in eine Wechselspannung um, die als dreiphasige Wechselspannung über die Leitungen L1, L2 und L3 in das Netz 6 eingespeist wird. Der Frequenzumrichter 18 wird mit Hilfe eines Mikrocomputers 20, der Teil der gesamten Regelungseinrichtung ist, gesteuert. Hierzu ist der Mikroprozessor 20 mit dem Frequenzumrichter 18 gekoppelt. Als Eingangsgrößen für die Regelung der Spannung, mit der die von der Windenergieanlage 2 zur Verfügung gestellte elektrische Leistung in das Netz 6 eingespeist wird, sind die aktuelle Netzspannung U, die Netzfrequenz f, die elektrische Leistung P des Generators, der Blindleistungsfaktor cosφ sowie der Leistungsgradient dP/dt. In dem Mikroprozessor 20 wird die erfindungsgemäße Regelung der einzuspeisenden Spannung verwirklicht.

Fig. 5 veranschaulicht den zeitlichen Verlauf der Spannungen und Ströme der drei Phasen des Netzes 6.

## Patentansprüche

1. Verfahren zum Betreiben einer Windenergieanlage mit einem von einem Rotor antreibbaren elektrischen Generator zum Abgeben elektrischer Leistung an ein elektrisches Netz (6), insbesondere dessen angeschlossene Verbraucher (8),
**dadurch gekennzeichnet, dass** die von dem Generator an das Netz (6) abgegebene Leistung in Abhängigkeit von einer dem Netz (6) anliegenden elektrischen Spannung geregelt wird,
wobei dann, wenn die Netzspannung einen Wert zwischen einem ersten Netzspannungswert (Uₘᵢₙ) und einem zweiten Netzspannungswert (U₀) annimmt, die vom Generator an das Netz abgegebene Leistung reduziert wird und zwar je mehr reduziert wird, umso geringer die Spannung ist,
wobei die vom Generator abgegebene, an das Netz (6) eingespeiste Leistung gleich bleibt, wenn die Netzspannung in dem Bereich zwischen dem zweiten Netzspannungswert (U₀) und einem dritten Netzspannungswert (U₁) liegt, wobei die von dem Generator an das Netz (6) abgegebene Leistung reduziert wird, wenn die Netzspannung in einem Bereich zwischen dem dritten Netzspannungswert (U₁) und einem vierten Netzspannungswert (Uₘₐₓ) liegt und zwar je mehr reduziert wird, je höher die Spannung ist,
wobei der erste Netzspannungswert (Uₘᵢₙ) kleiner ist als der zweite Netzspannungswert (U₀), der zweite Netzspannungswert (U₀) kleiner ist als der dritte Netzspannungswert (U₁) und der dritte Netzspannungswert (U₁) kleiner ist als der vierte Netzspannungswert (Uₘₐₓ) und dass seitens der Windenergieanlage keine Leistung in das Netz eingespeist wird, wenn die Netzspannung den ersten Netzspannungswert (Uₘᵢₙ) oder den vierten Netzspannungswert (Uₘₐₓ) annimmt.

2. Verfahren nach Anspruch 1,
**dadurch gekennzeichnet, dass** die von dem Generator abgegebene, in das Netz (6) eingespeiste Leistung in Abhängigkeit von einer am Netzeinspeisungspunkt (21) anliegenden elektrischen Spannung geregelt wird.

3. Verfahren nach Anspruch 1 und/oder 2,
**dadurch gekennzeichnet, dass** die abgegebene Leistung geregelt wird, indem die bereitgestellte elektrische Spannung auf einen gewünschten Sollwert (Uₛₒₗₗ) eingeregelt wird.

4. Verfahren nach Anspruch 3,
**dadurch gekennzeichnet, dass** die elektrische Spannung als Wechselspannung mit einer vorgebbaren Frequenz bereitgestellt wird.

5. Verfahren nach Anspruch 4,
**dadurch gekennzeichnet, dass** die vorgebbare Frequenz im Wesentlichen der Netzfrequenz entspricht.

6. Windenergieanlage zur Durchführung eines Verfahrens nach einem der vorhergehenden Ansprüche,
mit einem Rotor (4) und einem mit dem Rotor (4) gekoppelten elektrischen Generator zum Abgeben elektrischer Leistung an ein elektrisches Netz (6),
**gekennzeichnet durch** eine Regelungseinrichtung mit einem Spannungsaufnehmer zum Aufnehmen einer am Netz (6) anliegenden elektrischen Spannung, so dass die von dem Generator an das Netz (6) abgegebene Leistung in Abhängigkeit von der **durch** den Spannungsaufnehmer aufgenommenen Spannung regelbar ist,
wobei dann, wenn die Netzspannung einen Wert zwischen einem ersten Netzspannungswert (Uₘᵢₙ) und einem zweiten Netzspannungswert (U₀) annimmt, die vom Generator an das Netz abgegebene Leistung reduziert wird und zwar je mehr reduziert wird, um so geringer die Spannung ist,
wobei die vom Generator abgegebene, an das Netz (6) eingespeiste Leistung gleich bleibt, wenn die Netzspannung in dem Bereich zwischen dem zweiten Netzspannungswert (U₀) und einem dritten Netzspannungswert (U₁) liegt,
wobei die von dem Generator an das Netz (6) abgegebene Leistung reduziert wird, wenn die Netzspannung in einem Bereich zwischen dem dritten Netzspannungswert (U₁) und einem vierten Netzspannungswert (Uₘₐₓ) liegt und zwar je mehr reduziert wird, je höher die Spannung ist,
wobei der erste Netzspannungswert (Uₘᵢₙ) kleiner ist als der zweite Netzspannungswert (U₀), der zweite Netzspannungswert (U₀) kleiner ist als der dritte Netzspannungswert (U₁) und der dritte Netzspannungswert (U₁) kleiner ist als der vierte Netzspannungswert (Uₘₐₓ) und dass seitens der Windenergieanlage keine Leistung in das Netz eingespeist wird, wenn die Netzspannung den ersten Netzspannungswert (Uₘᵢₙ) oder den vierten Netzspannungswert (Uₘₐₓ) annimmt.

7. Windenergieanlage nach Anspruch 6,
**dadurch gekennzeichnet, dass** die Regelungseinrichtung einen Mikroprozessor aufweist.

8. Verfahren und Windenergieanlage nach einem der vorhergehenden Ansprüche,
**dadurch gekennzeichnet, dass** die Spannung der an das Netz eingespeisten elektrischen Leistung in Abhängigkeit der aktuellen Netzspannung (U), der Netzfrequenz (f), der elektrischen Leistung des Generators, des Blindleistungsfaktors (cosϕ) sowie des Leistungsgradienten (dP/dt) geregelt wird.

## Claims

1. A method of operating a wind energy plant with an electric generator, drivable by a rotor, to deliver electric power to an electric network (6), in particular its connected consumers (8), **characterized in that** the power delivered from the generator to the network (6) is regulated as a function of an electric voltage applied at the network (6),
wherein at the time when the mains voltage assumes a value between a first mains voltage value (Uₘᵢₙ) and a second mains voltage value (Uₒ), the power delivered to the network from the generator is reduced, namely the greater the reduction the lower the voltage,
wherein the power delivered from the generator and fed into the network (6) remains the same when the mains voltage lies in the range between the second mains voltage value (Uₒ) and a third mains voltage value (U₁),
wherein the power delivered from the generator to the network (6) is reduced when the mains voltage lies in a range between the third mains voltage value (U₁) and a fourth mains voltage value (Uₘₐₓ), namely the greater the reduction the higher the voltage,
wherein the first mains voltage value (Uₘᵢₙ) is lower than the second mains voltage value (Uₒ), the second mains voltage value (Uₒ) is lower than the third mains voltage value (U₁) and the third mains voltage value (U₁) is lower than the fourth mains voltage value (Uₘₐₓ), and **in that** no power is fed into the network on the part of the wind energy plant when the mains voltage assumes the first mains voltage value (Uₘᵢₙ) or the fourth mains voltage value (Uₘₐₓ).

2. A method according to claim 1, **characterized in that** the power delivered from the generator and fed into the network (6) is regulated as a function of an electric voltage applied at the network feeding point (21).

3. A method according to claim 1 and/or 2, **characterized in that** the delivered power is regulated in that the provided electric voltage is adjusted to a desired ideal value (U_{ideal}).

4. A method according to claim 3, **characterized in that** the electric voltage is provided as an alternating voltage with a frequency which can be predetermined.

5. A method according to claim 4, **characterized in that** the predeterminable frequency substantially corresponds to the network frequency.

6. A wind energy plant for carrying out a method according to any one of the preceding claims, with a rotor (4) and an electric generator, coupled with the rotor (4), to deliver electric power to an electric network (6),
**characterized by** a regulating device with a voltage sensor to detect an electric voltage applied at the network (6), so that the power delivered from the generator to the network (6) can be regulated as a function of the voltage detected by the voltage sensor,
wherein at the time when the mains voltage assumes a value between a first mains voltage value (Uₘᵢₙ) and a second mains voltage value (Uₒ), the power delivered from the generator to the network is reduced, namely the greater the reduction the lower the voltage,
wherein the power delivered from the generator and fed to the network (6) remains the same when the mains voltage lies in the range between the second mains voltage value (Uₒ) and a third mains voltage value (U₁),
wherein the power delivered from the generator to the network (6) is reduced when the mains voltage lies in a range between the third mains voltage value (U₁) and a fourth mains voltage value (Uₘₐₓ), namely the greater the reduction the higher the voltage,
wherein the first mains voltage value (Uₘᵢₙ) is lower than the second mains voltage value (Uₒ), the second mains voltage value (Uₒ) is lower than the third mains voltage value (U₁) and the third mains voltage value (U₁) is smaller than the fourth mains voltage value (Uₘₐₓ), and in that no power is fed into the network on the part of the wind energy plant when the mains voltage assumes the first mains voltage value (Uₘᵢₙ) or the fourth mains voltage value (Uₘₐₓ).

7. A wind energy plant according to claim 6,
**characterized in that** the regulating device has a microprocessor.

8. A method and wind energy plant according to any one of the preceding claims, **characterized in that** the voltage of the electric power fed to the network is regulated as a function of the prevailing mains voltage (U), the network frequency (f), the electric power of the generator, the reactive factor (cosΦ) and the power gradient (dP/dt).

## Revendications

1. Procédé permettant de faire fonctionner une éolienne au moyen d'un générateur électrique pouvant être entraîné par un rotor pour délivrer une puissance électrique à un réseau électrique (6), en particulier aux consommateurs (8) raccordés à ce dernier,
**caractérisé en ce que** la puissance délivrée par le générateur au réseau (6) est régulée en fonction d'une tension électrique appliquée au réseau (6),
dans lequel, lorsque la tension de réseau prend une valeur comprise entre une première valeur de tension de réseau (Uₘᵢₙ) et une deuxième valeur de tension de réseau (U₀), la puissance délivrée par le générateur au réseau est alors réduite, et ce d'autant plus réduite que la tension est faible,
dans lequel la puissance délivrée par le générateur et injectée dans le réseau (6) reste constante lorsque la tension de réseau se situe dans la plage comprise entre la deuxième valeur de tension de réseau (U₀) et une troisième valeur de tension de réseau (U₁),
dans lequel la puissance délivrée par le générateur au réseau (6) est réduite lorsque la tension de réseau se situe dans la plage comprise entre la troisième valeur de tension de réseau (U₁) et une quatrième valeur de tension de réseau (Uₘₐₓ), et ce d'autant plus réduite que la tension est élevée,
la première valeur de tension de réseau (Uₘᵢₙ) étant inférieure à la deuxième valeur de tension de réseau (U₀), la deuxième valeur de tension de réseau (U₀) étant inférieure à la troisième valeur de tension de réseau (U₁) et la troisième valeur de tension de réseau (U₁) étant inférieure à la quatrième valeur de tension de réseau (Uₘₐₓ), et **en ce qu'**aucune puissance n'est injectée dans le réseau de la part de l'éolienne lorsque la tension de réseau prend la première valeur de tension de réseau (Uₘᵢₙ) ou la quatrième valeur de tension de réseau (Uₘₐₓ).

2. Procédé selon la revendication 1,
**caractérisé en ce que** la puissance délivrée par le générateur et injectée dans le réseau (6) est régulée en fonction d'une tension électrique appliquée sur le point d'injection dans le réseau (21).

3. Procédé selon la revendication 1 et/ou 2,
**caractérisé en ce que** la puissance délivrée est régulée par le fait que la tension électrique fournie est réglée sur une valeur théorique (Uₛₒₗₗ) souhaitée.

4. Procédé selon la revendication 3,
**caractérisé en ce que** la tension électrique est fournie sous la forme d'une tension alternative présentant une fréquence pouvant être prédéfinie.

5. Procédé selon la revendication 4,
**caractérisé en ce que** la fréquence pouvant être prédéfinie correspond sensiblement à la fréquence de réseau.

6. Eolienne permettant de mettre en oeuvre un procédé selon l'une quelconque des revendications précédentes,
pourvue d'un rotor (4) et d'un générateur électrique couplé au rotor (4) permettant de délivrer une puissance électrique à un réseau électrique (6),
**caractérisée par** un dispositif de régulation pourvu d'un capteur de tension permettant de capter une tension électrique appliquée sur le réseau (6), de telle manière que la puissance délivrée par le générateur au réseau (6) peut être régulée en fonction de la tension captée par le capteur de tension,
dans laquelle, lorsque la tension de réseau prend une valeur comprise entre une première valeur de tension de réseau (Uₘᵢₙ) et une deuxième valeur de tension de réseau (U₀), la puissance délivrée par le générateur au réseau est alors réduite, et ce d'autant plus réduite que la tension est faible,
dans laquelle la puissance délivrée par le générateur et injectée dans le réseau (6) reste constante lorsque la tension de réseau se situe dans la plage comprise entre la deuxième valeur de tension de réseau (U₀) et une troisième valeur de tension de réseau (U₁),
dans laquelle, lorsque la tension de réseau se situe dans une plage comprise entre la troisième valeur de réseau (U₁) et une quatrième valeur de réseau (Uₘₐₓ), la puissance délivrée par le générateur au réseau (6) est réduite, et ce d'autant plus réduite que la tension est élevée,
la première valeur de tension de réseau (Uₘᵢₙ) étant inférieure à la deuxième valeur de tension de réseau (U₀), la deuxième valeur de tension de réseau (U₀) étant inférieure à la troisième valeur de tension de réseau (U₁) et la troisième valeur de tension de réseau (U₁) étant inférieure à la quatrième valeur de tension de réseau (Uₘₐₓ), et en ce qu'aucune puissance n'est injectée dans le réseau de la part de l'éolienne lorsque la tension de réseau prend la première valeur de tension de réseau (Uₘᵢₙ) ou la quatrième valeur de tension de réseau (Uₘₐₓ).

7. Eolienne selon la revendication 6,
**caractérisée en ce que** le dispositif de régulation comprend un microprocesseur.

8. Procédé et éolienne selon l'une quelconque des revendications précédentes,
**caractérisés en ce que** la tension de la puissance électrique injectée sur le réseau est régulée en fonction de la tension de réseau (U) actuelle, de la fréquence de réseau (f), de la puissance électrique du générateur, du facteur de puissance réactive (cosϕ) ainsi que du gradient de puissance (dP/dt).
